# EUROPÄISCHE PATENTANMELDUNG

(11) **EP 1 145 624 A2**
(43) Veröffentlichungstag der Anmeldung: **17.10.2001**
(21) Anmeldenummer: 01107195.8
(22) Anmeldetag: 22.03.2001
(51) Int. Cl.: A01J 5/08, A01J 5/007

(54) **Melkbecher**

(30) Priorität: 14.04.2000 DE 10018869
(71) Anmelder: Happel, Werner, D-87654 Friesenried (DE)
(72) Erfinder: Happel, Werner, D-87654 Friesenried (DE)
(74) Vertreter: Winter, Brandl, Fürniss, Hübner, Röss, Kaiser, Polte Partnerschaft

(57) **Zusammenfassung**

Offenbart sind ein Verfahren zur Ansteuerung eines Melkbechers und ein zur Durchführung des Verfahrens geeigneter Melkbecher, wobei ein Zitzengummiinnenraum während der Saughase über eine periodisch aufsteuerbare Einrichtung mit der Atmosphäre verbindbar ist.

## Beschreibung

Die Erfindung betrifft ein Verfahren zur Ansteuerung eines Melkbechers gemäß dem Oberbegriff des Patentanspruchs 1 und einen Zweiraum-Melkbecher gemäß dem Oberbegriff des Patentanspruchs 2.

Aus der DE-B-1 274 847 ist ein Klemmstück für Zweiraum-Melkbecher bekannt, das einen mit einer Rille und/oder einem Wulst versehenen Klemmkörper aufweist, von dessen Unterseite ein Rohrstutzen zum Anschluß an die Saugleitung mit einer auch den Klemmkörper durchsetzenden Bohrung ausgeht. Dabei ist das Klemmstück mit einem in einer Ebene der Melkbecherachse liegenden flachen Spreizflansch mit doppeltropfförmigem Querschnitt versehen, der beim Einführen des Klemmstückes in den Zitzengummi dessen schlauchförmigen unteren Teil radial vorspannt, wobei die äußeren tropfenförmigen Verdickungen die Räume ausfüllen, die bei sonstigen Klemmstücken die Verbindung von Zitzengummi-Innenraum und Milchabsaugleitung unerwünschterweise während des Entlastungstaktes aufrechterhalten. Durch die Trennung des Zitzengummi-Innenraumes von einer Saugleitung soll ein Abbau des Unterdruckes in dem die Zitze umgebenden Raum während des Entlastungstaktes ermöglicht und dadurch die Blutzirkulation in den Zitzen gefördert und Euterschäden vermieden werden.

In dieser DE-B1 274 847 wird auch das Einsteuern atmosphärischer Luft in den Zitzengummi-Innenraum beschrieben, wozu im Klemmstück Kanäle vorgesehen werden, die den Zitzengummi-Innenraum ständig mit der Außenluft verbinden. Die dabei auch während des Saugtaktes einströmende Luft beeinträchtigt zwar das Melkvakuum nicht wesentlich, belastet aber die Vakuumpumpe, die die kontinuierlich einströmende Luft abzusaugen hat. Bei größeren Melkanlagen, wo mehrere Melkzeuge gleichzeitig in Betrieb sind, kann die Vakuumpumpe eine erhebliche Mehrbelastung erfahren, so dass eine stärkere Dimensionierung des Maschinensatzes notwendig werden kann.

Um die Belastung der Vakuumpumpe herabzusetzen und ein Klemmstück zu schaffen, das während des Entlastungstaktes den Zitzengummi-Innenraum von der Saugleitung trennt und nur während dieser Zeit atmosphärische Luft in den Zitzengummi eintreten läßt, wird gemäß DE-B1 274 847 das Klemmstück in der Weise ausgebildet, dass auf der Oberseite des Klemmkörpers ein dachförmig abgeschrägter Keil mit etwa kreisförmiger, dem Durchmesser des Zitzengummis entsprechender Grundfläche vorgesehen ist, von dessen Flachseiten zur Bohrung des Rohrstutzens führende und von dessen Giebelseite den Klemmkörper durchsetzende, zur äußeren Atmosphäre führende Kanäle ausgehen.

Wenn demgemäß der Pulsator Unterdruck in den Melkbecherzwischenraum einsteuert, nimmt der Zitzengummi Schlauchform an. Dabei werden die von den Flachseiten des Keils ausgehenden und zur Saugleitung führenden Bohrungen freigegeben, wodurch der Unterdruck im Zitzengummi-Innenraum wirksam und dem Euter Milch entzogen wird. Gleichzeitig werden die von den gekrümmten Giebelseiten ausgehenden und zur äußeren Atmosphäre führenden Bohrungen durch den sich anliegenden Zitzengummi verschlossen, so dass während des Saugtakts keine atmosphärische Luft einströmen kann. Wenn zur Herbeiführung des Entlastungstaktes der Pulsator atmosphärische Luft in den Melkbecherzwischenraum einsteuert, legt sich der Zitzengummi unter der Wirkung des äußeren Überdruckes flach zusammen.

Dabei werden die von den Flachseiten des Keils ausgehenden Bohrungen verschlossen, so dass der Zitzengummi-Innenraum von der Unterdruckquelle getrennt wird. Da sich der flachlegende Zitzengummi verbreitert, hebt er sich von den Bohrungen an den gekrümmten Giebelseiten des Keiles ab, so dass nun atmosphärische Luft in den Zitzengummi-Innenraum einströmt. Das Öffnen und Schließen der verschiedenen Bohrungen im Wechseltakt beruht somit auf dem Wechsel zwischen Schlauch- und Flachform des elastischen Zitzengummis im Rhythmus der Pulsatorsteuerungen, wobei die Schlauchform zum Öffnen der Saugleitung und zum Schließen der Luftbohrungen und die Flachform zum Abschließen der Saugleitung und zum Öffnen der Luftbohrungen benutzt wird. Es wird auch daraufhingewiesen, dass auf die Luftbohrungen verzichtet werden kann, wenn durch die natürliche Undichtheit ein ausreichender Abbau des Unterdrucks erreicht wird.

Nachteilig bei diesem zur Herabsetzung der Belastung der Vakuumpume bestimmten Klemmstück ist, dass in dem unterhalb der in den Dachschrägen gelegenen Öffnungen vorhandenen Ringraum praktisch keine Möglichkeit zur Milchabführung besteht, dass dieser Bereich und auch die verschiedenen Kanäle für eine Bürstenreinigung nicht zugänglich sind und somit eine ständige Verschmutzungsgefahr vorliegt, die in der Praxis nicht in Kauf genommen werden kann. Außerdem ist im Betrieb der Druckunterschied zwischen Atmosphäre und dem abgeschlossenen Raum zwischen Zitze und Einsatzstück nach erfolgtem Kollabieren des Zitzengummis so gering, dass die zur Atmosphäre führenden Kanäle, deren Mündung ständig mit der mit Milch benetzten Zitzengummiwandung zusammenwirken müssen, nicht freigehalten werden können.

Aus der EP 0 052 637 Al ist ein Saugstutzen bekannt, an den zwei einander diametral gegenüberliegende Spreizelemente angeformt sind, die eine Spreizgabel für den Zitzengummi bilden.

Die Spreizung der Spreizelemente ist derart gewählt, dass der Zitzengummi in der Saugphase an den freien Enden der Spreizelemente anliegt und in der Entlastungsphase sich zwischen dem Zitzengummi und den freien Enden der Spreizelemente Freiräume ergeben.

In einem der Spreizelemente ist ein zur Atmosphäre führender und andererseits in Richtung zur Innenwandung des Zitzengummis führender Kanal vorgesehen. Während der Entlastungsphase strömt Luft über den Kanal in den Innenraum und während der Saugphase wird der Kanal mittels der Zitzengummiwandung verschlossen.

Der Nachteil dieser Lösung ist, dass beim Melken von Tieren mit hoher Leistung und hohem Minutengemelk durch die verursachte Absenkung des Vakuums im Innenraum die Massagebewegung des Zitzengummis geringer ist und dann nur noch sehr wenig, oder keine Luft mehr einströmen kann.

Dies hat zur Folge, dass der Milchabtransport vom Melkbecher zu milchabführenden Leitungen nicht mehr ausreichend gewährleistet ist.

Eine geringere Spreizung der Spreizgabeln würde wie bei den vorherigen Lösungen zum Dauerlufteinlaß führen, was eine starke Schaumbildung bei der Milch und mechanische Beschädigung durch freie Fettsäuren verursacht.

Aufgabe der Erfindung ist es den Lufteinlaß im Saugstutzen so zu steuern, dass ein optimaler Abtransport der Milch von der Zitze zum milchabführenden System gewährleistet ist und dass der Zeitpunkt und die Menge des Lufteinlaßes so gewählt wird, dass keine erhöhte Schaumbildung oder Schädigung der Milch erfolgt.

Diese Aufgabe wir hinsichtlich des Verfahrens durch die Merkmalkombination des Patentanspruchs 1 und hinsichtlich des Melkbechers durch die Merkmale des Patentanspruchs 2 gelöst.

Erfindungsgemäß wird periodisch der Lufteinlass im Gegensatz zur vorbeschriebenen Lösung während der Saugphase ermöglicht. Dazu kann an dem Schauglasstutzen eine Spreizeinrichtung mit beispielsweise zwei Spreizgabeln vorgesehen werden, die durch Anlage an den Zitzengummi die Massageeinfallrichtung vorgeben. Zumindest eine Spreizgabel weist einen Kanal mit Verbindung zur Atmosphäre einerseits und eine Mündung vorzugsweise mit Düse zum Zitzengummi-Innenraum andererseits auf. Die Lage des Kanals ist so gwählt, dass die Mündung während der Massagephase geschlossen ist und nur während der Saugphase oder Zitzengummi-Offen-Phase aufgesteuert wird. Die Belüftung in der Zitzengummi-Offen-Phase hat den Vorteil, dass mit minimaler Menge der einströmenden Luft ein maximaler Transport der Milch möglich ist. Vorteilhaft ist des Weiteren, dass durch die Verbindung mit der Atmosphäre im Saugtakt eine Vakuumüberhöhung bedingt durch Milchpfropfen verhindert wird.

Außerdem kann die einströmende Luft durch geeignete Aufsteuerung des Kanals genau abgestimmt werden, so dass die Luftmenge auch bei hohem Minutengemelk oder geringerer Massagebewegung des Zitzengummis immer gleichbleibt. Es besteht der Vorteil, dass die Düsenöffnung größer gewählt werden kann, um die Gefahr des Verstopfens zu verringern, die Dauer des Lufteinlasses wird dann entsprechend verkürzt.

Der Zeitpunkt für den Lufteinlass ist bestimmbar durch die Dimensionierung der Spreizgabel bzw. den Abstand der Düsenöffnung zur Zitzengummiwandung in der Zitzengummi-Offen-Phase oder die Distanz zur Mittelachse des Saugstutzens.

Eine Erhöhung der düsenseitigen Öffnung zum Zitzengummi (z.B. Ringwulst) reduziert das Geräusch beim Lufteinlaß, da die Luft dann nicht durch die an der Spreizgabel anliegende Flüssigkeit einströmt, und verbessert die Abdichtung in der Massagephase.

Um einer Verschmutzung der Düse oder des Kanals vorzubeugen ist eine einsteckbare Filterbürste vorgesehen. Eine Reinigung oder ein Durchspülen des Kanals ist auch in montiertem Zustand möglich, da der Zitzengummi im Ruhezustand die Düsenöffnung nicht verschließt.

Eine mögliche Variante ist die Kombination zweier periodisch aufsteuerbarer Lufteinlassdüsen, die in der Massagephase für die Entlastung der Zitze vom Vakuum und in der Saugphase für optimalen Milchtransport sorgen. Der Saugstutzen ist sowohl für herkömmliche Melksysteme, als auch für Entlastungsverfahren einsetzbar.

Im folgenden wird die Erfindung anhand schematischer Zeichnungen näher erläutert. Es zeigen:
Fig.1 eine schematische Längsschnitt-Darstellung eines Zweiraum-Melkbechers mit einer erfindungsgemäßen Ausführungsvariante des Einsatzstückes (Saugstutzen, Schauglas);
Fig.2 einen Querschnitt des Melkbechers nach Fig.1 (A-B) in Höhe des zum Zitzengummiinnenraum führenden Kanals in der Saugphase (Zitzengummi-Offen-Phase) und
Fig.3 eine Fig.2 entsprechende Darstellung in der Massagephase mit gestrichelt markierter Düse 13 als alternative Ausführung für zusätzlichen Lufteinlaß in der Massagephase.

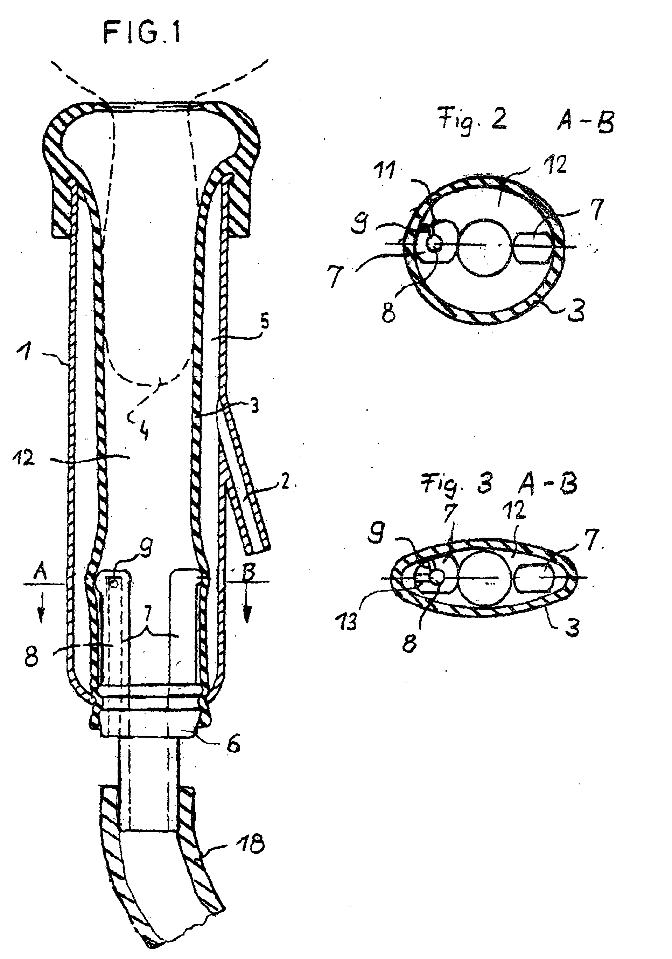

Fig.1 zeigt einen Zweiraum-Melkbecher, bestehend aus einer Melkbecherhülse 1 mit einem Anschlußstutzen 2 und einem in der Melkbecherhülse 1 festgespannten Zitzengummi 3 zur Aufnahme einer strichliert angedeuteten Zitze 4. Zwischen Zitzengummi 3 und Becherhülse 1 befindet sich der Melkbecherzwischenraum 5, der über den Anschlußstutzen 2 periodisch an Unterdruck und Atmosphäre oder Überdruck gelegt wird. Ein an sich konventionelles Schauglas 6 - auch Saugstutzen genannt -, mittels dessen das untere Ende des Zitzengummis 3 in der Melkbecherhülse 1 festgespannt wird, ist gemäß der Erfindung mit einem sich in den Zitzengummi-innenraum 12 erstreckenden Einsatz in Form einer Spreizgabel 7 versehen. Auf einen Schauglasstutzen ist der zum Sammelstück führende kurze Milchschlauch 18 geschoben.

In einem der beiden Gabelelemente ist ein Kanal 8 ausgebildet, der einerseits durch die Schauglaswandung zur Atmosphäre führt und andererseits nach entsprechender Umlenkung in eine vorzugsweise zur Melkbecherlängsachse senkrechte Richtung über eine Düse 9 im Zitzengummi-Innenraum 12 mündet. Der Einsatz 7 spreizt den Zitzengummi 3 leicht vor, und diese leichte Spreizung bestimmt gleichzeitig die Faltrichtung des Zitzengummis 3 beim Kollabieren bzw. beim Zusammenfalten des Zitzengummis im Massagetakt.

Fig.2 zeigt den Melkbecher im Schnitt A-B in der Saugphase (Zitzengummi-Offen-Phase). Die leichte Spreizung des Zitzengummis 3 durch die Spreizelemente 7 ist erkennbar. Über die Düse 9 und den Kanal 8 kann Atmosphäre in den Innenraum 12 einströmen. Direkt um die Öffnung der Düse 9 ist eine Ringwulst 11 ausgebildet, an die die Wandung des Zitzengummis 3 in Anlage gebracht werden kann.

Fig.3 zeigt den Melkbecher im Schnitt A-B in der Massagephase. Durch die Verformung aufgrund des größeren Drucks im Melkbecherzwischenraum 5 liegt der Zitzengummi 3 auf der Öffnung der Düse 9 und verschließt diese. Dadurch ist kein Lufteinlaß über die Düse 9 in der Massagephase möglich.

Mit der Düse 13 ist eine weitere Variante abgebildet, die auch in der Massagephase Luft einläßt.

Offenbart sind ein Verfahren zur Ansteuerung eines Melkbechers und ein zur Durchführung des Verfahrens geeigneter Melkbecher, wobei ein Zitzengummiinnenraum während der Saughase über eine periodisch aufsteuerbare Einrichtung mit der Atmosphäre verbindbar ist.

## Patentansprüche

1. Verfahren zur Ansteuerung eines Zweiraum-Melkbechers, mit einer Becherhülse (1), in die ein Zitzengummi (3) eingesetzt ist und mit einem an eine Milchabfüllleitung (18) angeschlossenen Saugstutzen (6), in dem ein Kanal (8) als Lufteinlass ausgebildet ist, wobei in einer Saugphase der vom Zitzengummi (3) begrenzte Innenraum und ein Melkbecherzwischenraum (5) mit gleichem Druck, vorzugsweise Unterdruck, beaufschlagt wird und in einer Massagephase im Melkbecherzwischenraum (5) ein höherer Druck als im Innenraum (12) angelegt wird, **dadurch gekennzeichnet, dass** in der Saugphase periodisch ein Lufteinlass in den Innenraum (12) erfolgt.

2. Zweiraum-Melkbecher zur Durchführung des Verfahrens nach Patentanspruch 1, mit einer Becherhülse (1), in die ein Zitzengummi (3) eingesetzt ist und mit einem mit einer Milchabführleitung (18) verbindbaren Saugstutzen (6) mit einer Spreizeinrichtung (7), **gekennzeichnet durch** einen Kanal (8), der während der Saugphase zum Innenraum (12) hin aufsteuerbar ist.

3. Zweiraum-Melkbecher nach Patentanspruch 1, wobei der Kanal (8) in einer Spreizgabel (7) ausgebildet ist und über eine Düse (9) im Innenraum mündet, und der Zitzengummi (3) die Düse (9) in der Massagephase absperrt.

4. Zweiraum-Melkbecher nach Patentanspruch 3, wobei um die Düse (9) eine etwa ringförmige Wulst (11) ausgebildet ist.

5. Zweiraum-Melkbecher nach einem der Patentansprüche 2 bis 4, wobei der Kanal (8) eine weitere Düse (13) hat, die während der Saugphase geschlossen und während der Massagephase geöffnet ist.

6. Zweiraum-Melkbecher nach einem der Patentansprüche 3 bis 5, wobei die Düse (9, 13) in Abhängigkeit von deren Abstand zur Zitzengummiwandung während der Saugphase aufsteuerbar ist.

7. Zweiraum-Melkbecher nach einem der Patentansprüche 3 bis 6, wobei die Düse (9) in dem Bereich des Saugstutzens (6) oder der Spreizeinrichtung (7) mündet, an den die Zitzengummiwandung während der Massagephase in Anlage bringbar ist und zu dem die Zitzengummiwandung während der Saugphase beabstandet ist.
